# EUROPEAN PATENT SPECIFICATION

(11) **EP 2 807 541 B1**
(45) Date of publication and mention of the grant of the patent: **02.09.2020**
(21) Application number: 12866909.0
(22) Date of filing: 26.01.2012
(51) Int. Cl.: G06F 9/451

(54) **IMAGE-BASED APPLICATION AUTOMATION**
BILDBASIERTE ANWENDUNGSAUTOMATISIERUNG
AUTOMATISATION D'APPLICATION À BASE D'IMAGES

(43) Date of publication of application: 03.12.2014
(73) Proprietor: EntIT Software LLC, Sunnyvale, California 94089 (US)
(72) Inventor: SAARONI, Dror, 56100 Yehud (IL); GAMMER, Marina, 56100 Yehud (IL); LIVNY, Yonathan, 56100 Yehud (IL); LANZKRON, Mordechai, 56100 Yehud (IL)
(74) Representative: EIP
(86) International application number: PCT/US2012/022741
(87) International publication number: WO 2013/112159

(56) References cited:
- US-A1- 2007 011 186
- US-A1- 2009 007 023
- US-A1- 2010 107 099
- US-A1- 2011 131 551

## Description

### BACKGROUND

Some image-based application (or software) automation systems typically include a record phase and a playback phase. During the record phase, an image-based application automation system records actions for an application that will be automated during a playback phase. For example, an image-based application automation system detects input events at a graphical user interface and captures an image of the graphical user interface in response to each input event. Often, the image-based application automation system then defines an automation action for each input event that specifies the image for that input event, and automation actions defined during the record phase are stored within a script file.

During the playback phase, the image-based application automation system performs the actions recorded during the record phase. For example, the image-based application automation system can identify the automation actions in the script file and replay the input events specified in the automation actions. That is, for each automation action, the image-based application automation system identifies a portion of a graphical user interface of the application that matches the image specified in that automation action and performs the input event at that portion of the application. Document US 2011/131551 describes a system and a method for identifying a graphical user interface element through which an input to an application was received based on comparing images generated from data provided by the application.

### BRIEF DESCRIPTION OF THE DRAWINGS

FIG. 1 is a flowchart of a process to associate a group of images with an input event, according to an implementation.
FIG. 2A is an illustration of a portion of a graphical user interface with a graphical user interface element in a first state, according to an implementation.
FIG. 2C is an illustration of the portion of the graphical user interface of FIGS. 2A and 2B with the graphical user interface element in a third state, according to an implementation.
FIG. 3A is an illustration of an image including the graphical user interface element of FIG. 2A, according to an implementation.
FIG. 3B is an illustration of an image including the graphical user interface element of FIG. 2B, according to an implementation.
FIG. 3C is an illustration of an image including the graphical user interface element of FIG. 2C, according to an implementation.
FIG. 4 is a schematic block diagram of an image-based application automation system, according to an implementation.
FIG. 5 is a schematic block diagram of a computing device hosting an image- based application automation system, according to an implementation.
FIG. 6 is a flowchart of a process to associate a group of images with an input event, according to an implementation.
FIGS. 7A and 7B are illustrations of a graphical user interface for selecting an image as a target for an input event, according to an implementation.

### DETAILED DESCRIPTION

According to a first aspect of the invention there is provided a processor-readable medium, as defined by appended claim 1. According to a second aspect of the invention there is provided an image-based application automation system, as defined by appended claim 3.

Image-based application (or software) automation systems can suffer from failures when such systems are unable to match an image related to an input event with a portion of a graphical user interface. For example, an input event can be relative to (or performed at) a graphical user interface element that has multiple states (e.g., visual appearances). As a specific example, the input event can be relative to a button control that has a first visual appearance when a cursor (e.g., a mouse pointer) does not hover over the button control, and a second visual appearance when the cursor hovers over the button control. Accordingly, an image of the button control that is captured in response to an input event such as a mouse button down input event at the button control will include the button control in the second visual appearance (or state) because the mouse pointer hovers over the button control when a mouse button down input event is performed at the button control.

However, during a replay phase, the mouse pointer may not be hovering over the button control when the image-based application automation system attempts to replay an automation action including the mouse button down input event (e.g., replay the mouse button down input even specified at the automation action) at the button control. As a result, the button control is in the first visual appearance, but the image for the mouse button down input event includes the button control in the second visual appearance. Thus, the image-based application automation system will likely fail to match the image with the button control, and the replay phase will fail for this automation action.

Some image-based application automation systems provide a mechanism that allows a user such as a test engineer to provide an image to an image-based application automation system as a substitute for an image generated (or captured) by the image-based application automation system. For example, after the failure described above, the user can manually generate an image that includes the button control in the first visual appearance, and provide that image to the image-based application automation system as a replacement for the image generated by the image-based application automation system.

Such a process, however, can be time-consuming for the user. For example, a user may be required to manipulate the application to display the button control in the first visual appearance, generate a screenshot image of the application, and then edit (e.g., crop or resize) the screenshot image to produce an image to replace the image generated by the image-based application automation system.

Implementations discussed herein associate multiple images with an input event. For example, multiple images including a graphical user interface element at which an input event is performed during a record phase of an image-based application automation system are captured at different times, and are identified (or referenced) by an automation action for that input event. Additionally, implementations discussed herein allow a user to specify which of the multiple images should be used to identify the portion of a graphical user interface (e.g., the graphical user interface element) at which the input event should be performed. Accordingly, for example, a user can select image from a group of images generated by an image-based application automation system and associated with an input event as the target for the input event rather than provide a user-generated image.

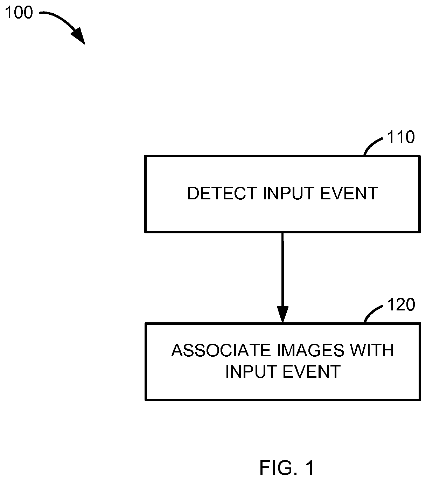

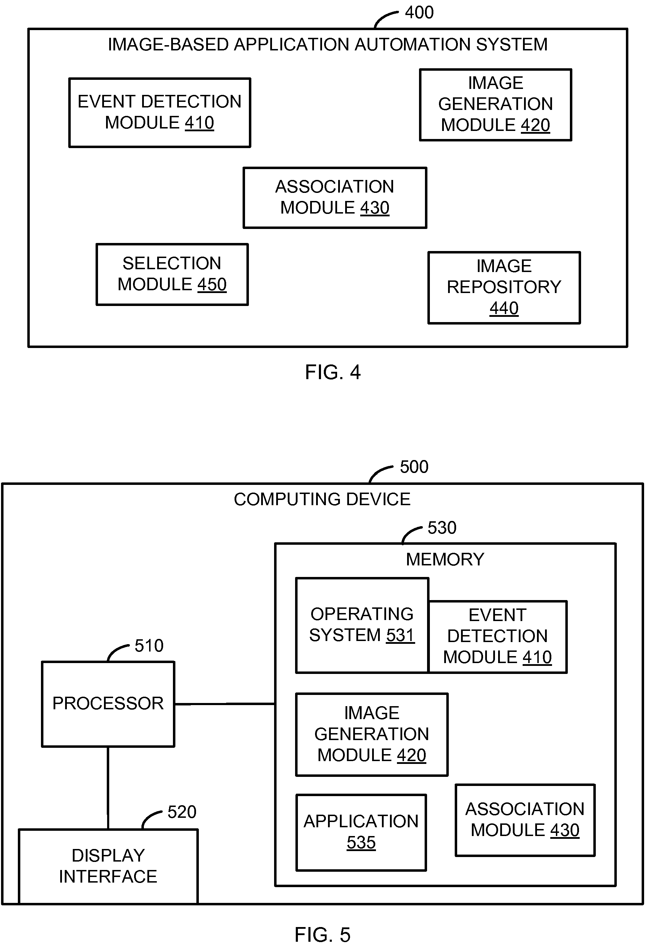

FIG. 1 is a flowchart of a process to associate a group of images with an input event, according to an implementation. Process 100 can be implemented at, for example, an image-based application automation system illustrated in FIG. 4 or FIG. 5 during a record phase. An input event is detected at block 110. An input event is an occurrence of input at a system such as a computing device. For example, an input event can be generated, for example, based on: movement of an input device such as a mouse pointer; interaction with (e.g., touching, performing gestures at, or movement relative to) a trackpad, touch-sensitive display, or proximity sensitive device; a mouse or keyboard button action (e.g., depression or release of a mouse button); or other input such as input from a motion-sensitive device (e.g., an accelerometer or gyroscope) or audio input device (e.g., a microphone).

Such inputs events are often performed relative to a graphical user interface (GUI) or elements of a graphical user interface (GUI elements). For example, a user can interact with a GUI element (e.g., using a mouse or touch-sensitive device click on the GUI element) to generate an input event relative to that GUI element. As another example, a GUI element can have or be the input focus of a GUI (e.g., in response to previous user selection of that GUI element), and input events that occur or are detected while that GUI has the input focus are relative to that GUI element. Accordingly, input events can be referred to as being relative to, occurring at, or performed at portions of a GUI or at GUI elements.

A GUI is a user interface that allows a user to interact with a system (e.g., a computing device) using graphical representations of objects rather than textual commands. For example, a user can move a cursor to a graphical representation of a button and press and release the graphical representation of the button using a mouse or touch-sensitive device.

Such graphical representations are referred to herein as graphical user interface elements (or GUI elements). A GUI element is a portion of a GUI at which a user can provide input to the GUI. For example, a GUI element can be a control such as, a pushbutton or button, a radio button, a check box, a text field or box, a dropdown list, a spinner (or spin control), a slider, an icon, a tree control, a scroll bar, a hyperlink, or some other control. As another example, a GUI element can be a GUI container that can include other GUI elements such as a window, a view, a dialog box, a frame, a tab, a menu, or some other container.

Often, a coordinate system such as a Cartesian coordinate system is associated with a GUI. For example, the upper-left corner of the GUI can be designated as the origin and described using the tuple (0, 0). Each point (often corresponding to each pixel of a display such as a computer monitor at which the GUI is output) of the GUI can then be described using as coordinates relative to the origin. For example, for a GUI displayed at a computer monitor with a resolution of 1,920 by 1,080 pixels, the point in the upper-left corner of the GUI is described as (0, 0), the point in the lower-left corner of the GUI is described as (0, 1,080), the point in the upper-right corner of the GUI is described as (1,920, 0), and the point in the lower-right corner of the GUI is described as (1,920, 1,080). Accordingly, input events can include a description of the location (or locations) at the GUI an input event occurred. For example, an input event for movement of a cursor can specify one set of coordinates indicating where the movement began (e.g., the position of the cursor before the movement) and another set of coordinates indicating where the movement ended.

The image-based application automation system implementing process 100 can detect input events at block 110 using a variety of methodologies. For example, an image-based application automation system can register with an operating system (e.g., using an application programming interface (API) of the operating system) to receive a notification or signal such as a system signal, a function call, or method invocation that includes a description of an input event (e.g., an identifier of a type of class of the input event, a description of the input event such as which button was pressed at a keyboard, and/or a location of the input event). As another example, an image-based application automation system can communicate with one or more device drivers to receive notifications or signals when peripheral devices (e.g., a mouse, a touch- or proximity-sensitive device such as a trackpad, a physical keyboard, or a virtual keyboard such as an on-screen keyboard) provide signals or notifications to a computing device to indicate that an input event has occurred at those peripheral devices. As yet another example, an image-based application automation system can instrument an operating system (e.g., hook input event handling routines of the operating system or provide a device driver) to intercept notifications or signals that are related to input events and are generated by the operating system or device drivers.

After the input event is detected at block 110, multiple images are associated with the input event at block 120. In other words, the image-based application automation system implementing process 100 defines or establishes a relationship between the input event and two or more images. For example, a description of the input event and identifier of each image (e.g., universal resource identifier (URI), filesystem path, or filename) to be associated with the input event can be stored at an automation action. An automation action represents an input event to be replayed during a replay phase. As examples, an automation action can be represented or stored as a portion of a script file, an Extensible Markup Language (XML) element or group of XML elements, or a data structure at an image-based application automation system.

As used herein, the term "image" means a representation of some subject (e.g., a GUI, a portion of a GUI, or a GUI element) that is based on the visual appearance of the subject. Moreover, a copy or transform (e.g., altered color space, size, aspect, or ratio) of an image of a subject is also an image of the subject.

In some implementations, the images associated with the input event are generated chronologically at various times during a record phase or are based on such images. For example, the image-based application automation system implementing process 100 can generate images of a GUI (e.g., perform a screen capture or a screenshot relative to the GUI) at an interval such as every other second or every 200 milliseconds. Alternatively, for example, the image-based application automation system implementing process 100 can generate images of a GUI in response to input events such as movement input events.

In some implementations, each image generated during a record phase is cached or archived by the image-based application automation system. In some implementations, an image-based application automation system implementing process 100 includes a fixed-length queue in which the most recently generated images are stored. Furthermore, in some implementations, the image-based application automation system implementing process 100 also generates an image of the GUI in response to the input event detected at block 110. Moreover, the image-based application automation system implementing process 100 can continue to generate images of the GUI after an input event is detected.

The number of images associated with an input event can vary according to various implementations based on, for example, a type or class of an input event, a user-defined or -configurable parameter, a predefined parameter, or other criteria. Additionally, the images associated with an input event include the portion of a GUI or GUI element at which the input event was performed. For example, as discussed above, the images associated with the input event can include a portion of a GUI or GUI element in different states. Moreover, the images associated with an input event can be centered at the location at which the input event occurred. More specifically, for example, an image-based application automation system can identify the location of the input event at the GUI based on location information included in a description of that input event or a previous input event.

The image-based application automation system can then generate a group of images to be associated with the input event. For example, the image-based application automation system can identify a portion of the GUI or a GUI element that surrounds the location. As a specific example, using edge detection or other image processing analysis methodologies, the image-based application automation system can identify a GUI element that includes or surrounds the location. As another example, the image-based application automation system can identify a portion of the GUI by defining a rectangle, ellipse, polygon, or other shape including or centered at the location. The image-based application automation system can then generate a group of images including the portion of the GUI or GUI element by, for example: accessing two images that were captured before the input event, an image captured in response to the input event, and an image captured after the input event; generating copies of those images; and cropping the image copies about the identified portion of the GUI or GUI element (e.g., based on the coordinate system of the GUI scaled as appropriate for each image). The cropped images can then be associated with the input event as discussed above, and/or stored at a data store.

As discussed above, the image copies can be cropped to have various dimensions or shapes according to various implementations. Moreover, the image copies can be cropped about a location (or point) other than the location of the input event. In other words, the cropped image copies can be centered at a location of the GUI other than the location of the input event. In such implementations, the image-based application automation system replays the input event during a replay phase at a location appropriately offset from the center of such images such that the input event is replayed at the same location as the location at which the input event occurred during the record phase. As used herein, a second location is the same as a first location if the second location is identical to the first location or is sufficiently similar or close to the first location that an input event at the second location has the same effect at a GUI or GUI element as that input event at the first location.

Process 100 illustrated in FIG. 1 is an example implementation. In other implementations, such a process can include additional blocks or steps. For example, in some implementations, process 100 can include an additional block at which an automation action including or identifying an input event and associated images is defined. Moreover, blocks 110 and 120 can be repeated for each input event in a group of input events. Furthermore, in some implementations, input events can be detected with which images are not associated. For example, some input events such as input events for input from a keyboard (e.g., for keystrokes) are applied to a portion of a GUI or a GUI element which has or is the current input focus of the GUI, and, therefore, the image-based application automation system replaying such input events need not identify that portion of the GUI or that GUI element to replay such input event.

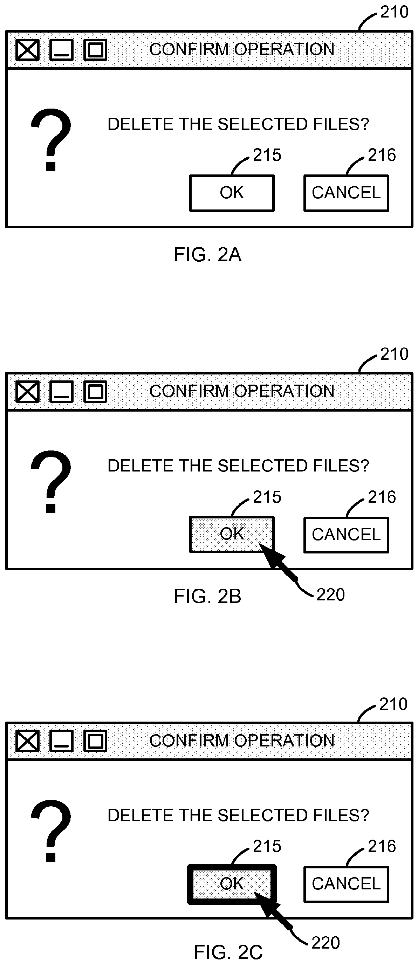

FIGS. 2A, 2B, and 2C are illustrations of a portion of a graphical user interface with a graphical user interface element in a first state, in a second state, and in a third state, respectively, according to an implementation. Window 210 is a GUI element that includes buttons (GUI elements) 215 and 216. Although the GUI elements in the example illustrated in FIGS. 2A, 2B, and 2C are buttons, other GUI elements can be used in other implementations. Cursor 220 is a cursor such as a mouse pointer via which a user can interact with window 210, button 215, and/or button 216.

Button 215 has various states including the first state illustrated in FIG. 2A, the second state illustrated in FIG. 2B, and the third state illustrated in FIG. 2C. The states of button 215 are different visual appearances of button 215, and are used to provide an indication (e.g., to a user) of the current status of button 215. In the example illustrated in FIGS. 2A, 2B, and 2C, button 215 is in the first state when cursor 220 is not interacting with button 215 (FIG. 2A), is in the second state when cursor 220 hovers or is at button 215 (FIG. 2B), and is in the third state when a mouse button down event occurs and cursor 215 hovers at button 215 (FIG. 2C).

As discussed above, because the state (or visual representation) of GUI elements of an application with respect to which automation actions will be replayed (or the input events specified in those automation actions are specified) can change during execution of that application, image-based application automation systems can fail to identify a portion of the application (output using a GUI) at which an automation action should be replayed because the image specified in that automation action includes that portion of the application in one state, but that portion of the application is currently (i.e., when the automation action should be replayed) in a different state.

An image-based application automation system implemented according to implementations discussed herein can generate multiple images of a GUI (or portions thereof) during a record phase. For example, such an image-based application automation system can generate a group of images of window 210 that includes at least one image of button 215 in the first state and at least one image of button 215 in the second state by periodically capturing screenshots of the application including window 210 or by capturing screenshots in response to input events such as movement input events. Moreover, the image-based application automation system can detect an input event when a mouse down event occurs at button 215 (e.g., when cursor 220 hovers at button 215), and can generate an image that includes button 215 in the third state in response to that input event.

Additionally, in response to the input event, the image-based application automation system can crop images (e.g., each image or a subset of the images such as every other image or every n^{th} image) from those images about the location of the input event. For example, a notification from an operating system of a computing device hosting the application can provide a notification to the image-based application automation system that includes coordinates of the input event. The image-based application automation system can then crop images to generate a second group of images of the GUI element to which the input event was relative, and can associate the second group of images with the input event (e.g., at an automation action).

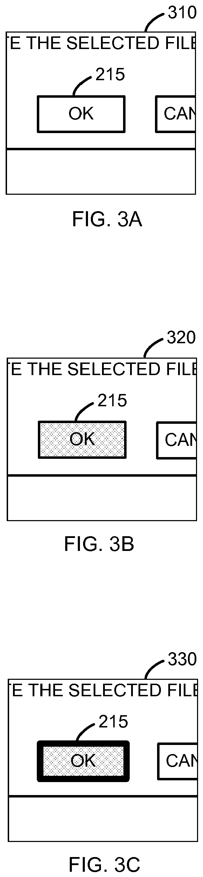

FIGS. 3A, 3B, and 3C are illustrations of images including button 215 in the states illustrated in FIG. 2A, 2B, and 2C, respectively, according to an implementation. Said differently, FIGS. 3A, 3B, and 3C illustrate the second group of images associated with the input event, as discussed above. Image 310 includes button 215 in the first state and a portion of window 210. Similarly, image 320 includes button 215 in the second state and a portion of window 210, and image 330 includes button 215 in the third state and a portion of window 210. In the example illustrated in FIGS. 3A, 3B, and 3C, the center of each of images 310, 320, and 330 is generally or substantially at the location of cursor 220 when the input event was detected (e.g., at the location identified by an operating system of a computing device hosting the application as the location of the input event).

FIG. 4 is a schematic block diagram of an image-based application automation system, according to an implementation. Image-based application automation system 400 includes event detection module 410, image generation module 420, association module 430, image repository 440, and selection module 450. Although various modules (i.e., combinations of hardware and software) are illustrated and discussed in relation to FIGS. 4 and 5 and other example implementations, other combinations or sub-combinations of modules can be included within other implementations. Said differently, although the modules illustrated in FIGS. 4 and 5 and discussed in other example implementations perform specific functionalities in the examples discussed herein, these and other functionalities can be accomplished, implemented, or realized at different modules or at combinations of modules. For example, two or more modules illustrated and/or discussed as separate can be combined into a module that performs the functionalities discussed in relation to the two modules. As another example, functionalities performed at one module as discussed in relation to these examples can be performed at a different module or different modules.

Event detection module 410 detects or determines when input events occur at an application including a GUI, and provides a notification (e.g., a signal or a message) related to the input event to association module 430. In some implementations, event detection module 410 also provides notifications related to input events to image generation module 420. As discussed above, event detection module 410 can, for example, register with or instrument an operating system at which an application is hosted to receive notifications of input events.

Image generation module 420 generates images of a GUI. For example, image generation module 420 can capture screenshots of a GUI at some interval and/or can receive notifications related to input events from event detection module 410 and generate images in response to such notifications. In some implementations, image generation module 420 can generate images in response to stimulus or signals from other modules.

In some implementations, image generation module 420 stores images in a queue to maintain a record of the most recent images generated at image generation module 420. For example, image generation module 420 can store the seven most recently generated images at a queue. When a new image is generated, the oldest of the seven images is discarded from the queue (e.g., overwritten in a memory, removed from a memory, or memory for that image is deallocated) and the new image is added to the queue. In other implementations, image generation module 420 stores images at image repository 440. Image repository 440 can be a data store such as a database or memory allocated to store images. In some implementations, image repository 440 is or operates as a fixed-length queue (e.g., similar to the queue discussed above in relation to image generation module 420). In other implementations, image repository 440 is a data store at which all images generated by image generation module 420 during a record phase are stored.

In some implementations, images generated by image generation module 420 are temporarily stored (e.g., cached) at image generation module 420, and stored for the duration of a record phase (or longer) at image repository 440. Thus, for example, images can be stored at a fixed-length queue of image generation module 420, and stored at image repository prior to being discarded from image generation module 420.

Association module 430 receives a notification related to an input event from event detection module 410, and associates a group of images generated at image generation module 420 with the input event. For example, association module 430 can access a group of the most recently generated images at image generation module 420 and/or image repository 440, and include identifiers (e.g., URIs) of those images within an automation action generated at association module 430 for that input event (e.g., an automation action that includes a description of that input event).

In some implementations, association module 430 generates images based on images accessed at image generation module 420 and/or image repository 440, and associates the images generated at association module 430 with the input event. For example, association module 430 can generate copies of images accessed at image generation module 420 and/or image repository 440, crop those copies of images to generate reduced-size images that include (e.g., are centered about or surround) the location of the input event relative to a GUI, and associate the reduced-size images with the input event. Accordingly, each image associated with the input event can include a portion of a GUI with the GUI element at which the input event occurred rather than the entire GUI.

FIG. 5 is a schematic block diagram of a computing device hosting an image-based application automation system, according to an implementation. In the example illustrated in FIG. 5, computing device 500 includes processor 510, display interface 520, and memory 530, and hosts operating system 531, event detection module 410, image generation module 420, association module 430, and application 535. Processor 510 is any combination of hardware and software that executes or interprets instructions, codes, or signals. For example, processor 510 can be a microprocessor, an application-specific integrated circuit (ASIC), a distributed processor such as a cluster or network of processors or computing devices, a multicore or multi-processor processor, or a virtual or logical processor of a virtual machine.

Display interface 520 is a combination of hardware and software that outputs data to a display such as a computer monitor, a notebook computer display, or tablet display. For example, display interface 520 can include a graphics card or graphics processor coupled to processor 510 and related software driver hosted at that graphics card, graphics processor, and/or processor. In some implementations, such as computing device can be a notebook computer, tablet, all-in-one desktop computer, or other computing device with an integrated display. In such implementations, display interface 520 can include a display.

Memory 530 is a processor-readable medium that stores instructions, codes, data, or other information. As used herein, a processor-readable medium is any medium that stores instructions, codes, data, or other information non-transitorily and is directly or indirectly accessible to a processor. Said differently, a processor-readable medium is a non-transitory medium at which a processor can access instructions, codes, data, or other information. For example, memory 530 can be a volatile random access memory (RAM), a persistent data store such as a hard disk drive or a solid-state drive, a compact disc (CD), a digital video disc (DVD), a Secure Digital™ (SD) card, a MultiMediaCard (MMC) card, a CompactFlash™ (CF) card, or a combination thereof or other memories. Said differently, memory 530 can represented multiple processor-readable media. In some implementations, memory 530 can be integrated with processor 510, separate from processor 510, or external to computing device 510.

Memory 530 includes instructions or codes that when executed at processor 510 implement operating system 531, event detection module 410, image generation module 420, association module 430, and application 535. In other words, operating system 531, an image-based application automation system including event detection module 410, image generation module 420 and association module 430, and application 535 are hosted at computing device 500.

In the example illustrated in FIG. 5, application 535 is an application at which an image-based application automation system including event detection module 410, image generation module 420, and association module 430 can record input events to generate automation actions. In other implementations, application 535 is hosted at a different computing device, and an image-based application automation system including event detection module 410, image generation module 420, and association module 430 can record input events at that application to generate automation actions via a communications link using, for example, a communications interface at computing device 500 and the other computing device (not shown) and a desktop sharing system such as Microsoft Remote Desktop Connection™ or Virtual Network Computing (VNC).

In some implementations, computing device 500 can be a virtualized computing device. For example, computing device 500 can be hosted as a virtual machine at a computing server. Moreover, in some implementations, computing device 500 can be a virtualized computing appliance, and operating system 531 is a minimal or just-enough operating system to support (e.g., provide services such as a communications protocol stack and access to components of computing device 500 such as display interface 520) event detection module 410, image generation module 420, association module 430, and application 535.

Event detection module 410, image generation module 420, and association module 430 can be accessed or installed at computing device 500 from a variety of memories or processor-readable media. For example, computing device 500 can access event detection module 410, image generation module 420, and association module 430 at a remote processor-readable medium via a communications interface such as a network interface card (NIC, not shown). As a specific example, computing device 500 can be a thin client that accesses operating system 531, event detection module 410, image generation module 420, association module 430, and application 535 during a boot sequence.

As another example, computing device 500 can include (not illustrated in FIG. 5) a processor-readable medium access device (e.g., CD, DVD, SD, MMC, or a CF drive or reader), and can access event detection module 410, image generation module 420, and association module 430 at a processor-readable medium via that processor-readable medium access device. As a more specific example, the processor-readable medium access device can be a DVD drive at which a DVD including an installation package for one or more of event detection module 410, image generation module 420, and association module 430 is accessible. The installation package can be executed or interpreted at processor 510 to install one or more of event detection module 410, image generation module 420, and association module 430 at computing device 500 (e.g., at memory 530). Computing device 500 can then host or execute event detection module 410, image generation module 420, and association module 430.

In some implementations, event detection module 410, image generation module 420, and association module 430 can be accessed at or installed from multiple sources, locations, or resources. For example, some components of event detection module 410, image generation module 420, and association module 430 can be installed via a communications link, and other components of event detection module 410, image generation module 420, and association module 430 can be installed from a DVD.

In other implementations, event detection module 410, image generation module 420, and association module 430 can be distributed across multiple computing devices. That is, some components of event detection module 410, image generation module 420, and association module 430 can be hosted at one computing device and other components of event detection module 410, image generation module 420, and association module 430 can be hosted at another computing device. As a specific example, event detection module 410, image generation module 420, and association module 430 can be hosted within a cluster of computing devices where each of event detection module 410, image generation module 420, and association module 430 is hosted at multiple computing devices, and no single computing device hosts each of event detection module 410, image generation module 420, and association module 430.

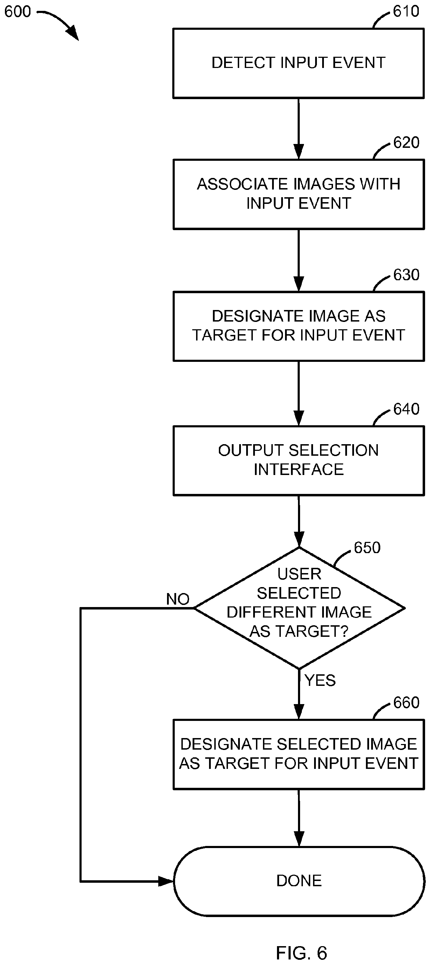

FIG. 6 is a flowchart of a process to associate a group of images with an input event, according to an implementation. As illustrated in FIG. 6, an input event is detected at block 610 and images are associated with that input event at block 620, for example, as discussed above in relation to FIG. 1. An image from the images associated with the input event at block 620 is then designated as a target for the input event at block 630. The target for the input event is the image that should be used during a replay phase to identify the portion of a GUI to which the input event with which that image is associated should be applied or performed.

The target can be designated using a variety of methodologies. For example, an image generated in response to the input event can be designated as the target for the input event by listing an identifier of that image first in a list of images associated with the input event at an automation action for that input event. In other implementations, an automation action can include a field at which an identifier of the image that is the target for the input event can be included. As yet another example, a target flag or attribute can be set for the image that is the target for the input event, and a target flag or attribute can be reset for each other image associated with the input event.

Additionally, the image designated as the target for the input event can be selected based on a variety of methodologies. For example, an image generated after the input event can be designated as the target. As another example, the image generated in response to the input event can be designated as the target. As yet another example, an image generated a predetermined number of seconds or milliseconds before or after the input event can be designated as the target.

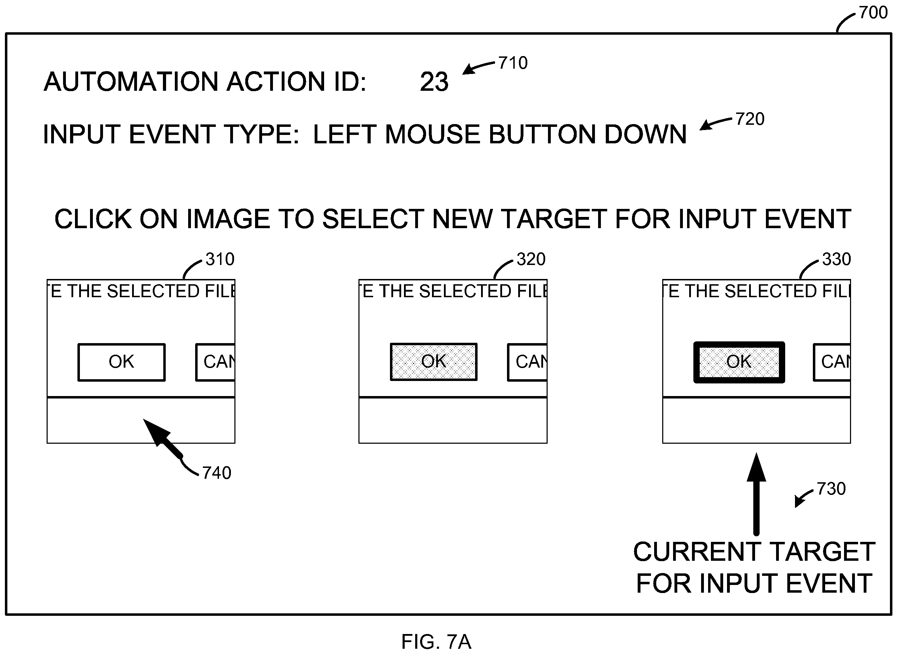

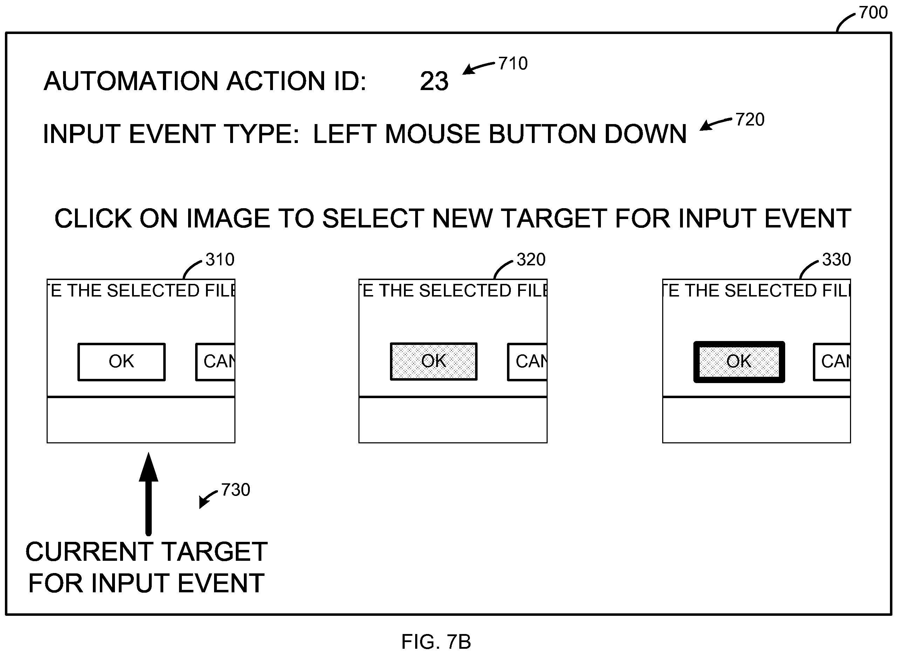

At block 640, a selection interface is output to a user. The selection interface allows to user indicate that an image different from the image currently designated as the target should be designated as the target for the input event (e.g., in an automation action for the input event). FIGS. 7A and 7B illustrate a selection interface.

If the user provides input (e.g., a keystroke, a mouse click, or a tap at a touch-sensitive input device) that indicates that the target should not be changed (e.g., that the image currently designated as the target should be the target), process 600 completes. In some implementations, process 600 also defines an automation action for the input event. More specifically, for example, the user can click on an "Accept" or "OK" button at the selection interface, and an image-based application automation system implementing process 600 can define an automation action for the input event which specifies the input event, the images associated with the input event, and the target.

If the user provides input that indicates the target should be changed, process 600 proceeds to 660 at which the image-based application automation system implementing process 600 selects an image based on the user input and designates that image as the target. For example, FIGS. 7A and 7B are illustrations of a graphical user interface for selecting an image as a target for an input event, according to an implementation. In the example illustrated in FIGS. 7A and 7B, selection interface 700 includes information related to an automation action. For example, selection interface 700 includes information that identifies an automation action 710, information that identifies the type of an input event 720, the images (or representation of images) associated with an input event (here, images 310, 320, and 330 discussed above in relation to FIGS. 2A, 2B, 2C, 3A, 3B, and 3C), and information that identifies the current target for the input event 730.

Selection interface 700 can be displayed by an image-based application automation system in response to selection of an automation action by a user. For example, the image-based application automation system can display a list of automation actions at another interface (not shown), and the user can select (e.g., click on using a mouse) a representation of an automation action to cause the image-based application automation system to output selection interface 700.

As illustrated in FIG. 7A, the current target for the input event is image 330. Image 330 was generated in response to an input event, and includes (or shows) an "OK" button in a state associated with a click action of a mouse. However, because the cursor will not be at the "OK" button when the image-based application automation system attempts to replay this automation action, the "OK" button will have the state included (or shown) in image 310. Accordingly, the user would like to designate image 310 as the target for this automation action (or for the input event associated with this automation action).

To designate image 310 as the target for this automation action, the user navigates cursor 740 to image 310 and clicks on image 310. In response, selection interface updates as illustrated in FIG. 7B to indicate that image 310 is now the current target for this automation action, and the image-based application automation system will attempt to locate a portion of a GUI which matches image 310 at which an input event will be replayed during a replay phase.

Referring again to FIG. 6, the image selected in response to the user input (image 310 as discussed above in relation to FIGS. 7A and 7B) is designated at block 660 as the target for the input event (or for the automation action for the input event) detected at block 610. Process 600 then completes. As discussed above, some implementations, process 600 defines or updates an automation action for the input event before completing, for example, to designate the new target within the automation action. For example, process 600 can store an identifier of the image selected in response to the user input (or selected by the user) at a field of an automation action. As another example, a list of identifiers of images associated with the input event can be rearranged such that the identifier of the image selected in response to the user input is listed first or in some other predetermined position. As yet another example, a target flag associated with the image previously designated as the target can be reset, and a target flag associated with the image selected in response to the user input can be set.

Process 600 as illustrated in FIG. 6 is an example of one implementation. In other implementations, process 600 can include additional, fewer, or rearranged blocks (or steps) than those illustrated in FIG. 6. For example, in some implementations, an image is not designated as a target at block 630. That is, the image-based application automation system implementing process 600 does not designate or preliminarily designate a target for the input event. Rather, the image-based application automation system outputs the selection interface at block 640 to prompt the user to select an image as a target.

Moreover, in some implementations, the image-based application automation system implementing process 600 does not output the selection interface as part of process 600. Said differently, for example, blocks 610, 620, 630, and 640 are part of a first process (or sub-process), and blocks 640, 650, and 660 are part of a second process (or sub-process). As a specific example, blocks 610, 620, 630, and 640 are executed as discussed above during a record phase of an image-based application automation system, and the image-based application automation system executes blocks 640, 650, and 660 in response to user input in parallel of asynchronously with respect to blocks 610, 620, 630, and 640. In other words, the image-based application automation system executes blocks 640, 650, and 660 when a user indicates (e.g., clicks a button using a mouse) that the user would like to designate an image as the target for an input event.

While certain implementations have been shown and described above, various changes in form and details may be made. For example, some features that have been described in relation to one implementation and/or process can be related to other implementations. In other words, processes, features, components, and/or properties described in relation to one implementation can be useful in other implementations. As another example, functionalities discussed above in relation to specific modules or elements can be included at different modules, engines, or elements in other implementations. Furthermore, it should be understood that the systems, apparatus, and methods described herein can include various combinations and/or sub-combinations of the components and/or features of the different implementations described. Thus, features described with reference to one or more implementations can be combined with other implementations described herein.

As used herein, the term "module" refers to a combination of hardware (e.g., a processor such as an integrated circuit or other circuitry) and software (e.g., machine- or processor-executable instructions, commands, or code such as firmware, programming, or object code). A combination of hardware and software includes hardware only (i.e., a hardware element with no software elements), software hosted at hardware (e.g., software that is stored at a memory and executed or interpreted at a processor), or at hardware and software hosted at hardware.

Additionally, as used herein, the singular forms "a," "an," and "the" include plural referents unless the context clearly dictates otherwise. Thus, for example, the term "module" is intended to mean one or more modules or a combination of modules. Moreover, the term "provide" as used herein includes push mechanism (e.g., sending an interface description to a scanner via a communications path or channel), pull mechanisms (e.g., delivering an interface description to a scanner in response to a request from the scanner), and store mechanisms (e.g., storing an interface description at a data store or service at which a scanner can access the interface description). Furthermore, as used herein, the term "based on" includes based at least in part on. Thus, a feature that is described as based on some cause, can be based only on the cause, or based on that cause and on one or more other causes.

## Claims

1. A processor-readable medium storing code representing instructions that when executed at a processor cause the processor to:
detect, by an event detection module, (610), during a record phase, an input event relative to a graphical user interface;
generate, by an image generation module, during the record phase, a plurality of images comprising a graphical element, each respective image of the plurality of images being captured at different times and comprising the graphical element affected by the input event and differing in appearance from the graphical element included in another image of the plurality of images, and
associate, by an association module, (620), during the record phase, with the input event the plurality of images, each image from the plurality of images including at least a portion of the graphical user interface that includes the graphical element at which the input event occurred;
designate, in response to a user input, (630), during the record phase, an image from the plurality of images as a target for the input event, wherein the designated image is used as a target during a replay phase to identify the portion of the graphical user interface to which the input event should be applied; and
define an automation action identifying the input event and the target, the input event to be replayed during the replay phase.

2. The processor-readable medium of claim 1, wherein the processor-readable medium further comprises code representing instructions that when executed at the processor cause the processor to:
select an image from the plurality of images in response to user input; and
designate the selected image as a target for the input event.

3. An image-based application automation system (400), comprising:
an event detection module (410) to detect, during a record phase, input events relative to a graphical user interface;
an image generation module (420) to generate, during the record phase, images associated with the input events and comprising a graphical element, each image from the images being captured at different times and comprising the graphical element affected by the input events and differing in appearance from the graphical element included in another image of the images, and including at least a portion of the graphical user interface;
an association module (430) to associate, during the record phase, a plurality of images from the images with an input event from the input events;
a selection module (450) to select, during the record phase, an image from the plurality of images in response to user input; and
the association module (430) configured to designate, during the record phase, the selected image from the plurality of images as a target for the input event, wherein the designated image is used as a target during a replay phase to identify the portion of the graphical user interface to which the input event should be applied, and define an automation action identifying the input event and the target, the input event to be replayed during the replay phase.

4. The system (400) of claim 3, further comprising:
an image repository (440), the association module (430) storing the plurality of images at the image repository (440).

5. The system (400) of claim 3 or 4, wherein:
the graphical element is a graphical user interface element; and
the input event is relative to the graphical user interface element of the graphical user interface; and
the plurality of images includes a first image including at least a portion of the graphical user interface element in a first state and a second image including at least a portion of the graphical user interface element in a second state.

6. The processor-readable medium of claim 1 or 2, wherein the plurality of images includes at least one image captured before the input event, at least one image captured in response to the input event, and at least one image captured after the input event.

7. The processor-readable medium of any of claims 1, 2 or 6, wherein the designated image is a first image from the plurality of images and the processor-readable medium further comprises code representing instructions that when executed at the processor cause the processor to:
select a second image from the plurality of images in response to user input; and
designate the second image from the plurality of images as the target for the input event.

8. The processor-readable medium of claim 7, wherein the processor-readable medium further comprises code representing instructions that when executed at the processor cause the processor to:
output a selection interface including the plurality of images to a display.

## Patentansprüche

1. Prozessorlesbares Medium, das Code speichert, der Anweisungen darstellt, die bei ihrer Ausführung an einem Prozessor den Prozessor zu Folgendem veranlassen:
Erfassen (610), während einer Aufzeichnungsphase, eines auf eine grafische Benutzeroberfläche bezogenes Eingabeereignisses durch ein Ereigniserfassungsmodul;
Erzeugen, während der Aufzeichnungsphase, mehrerer ein grafisches Element umfassender Bilder durch ein Bilderzeugungsmodul, wobei jedes jeweilige Bild der mehreren Bilder zu unterschiedlichen Zeiten aufgenommen wird und das grafische Element umfasst, das vom Eingabeereignis beeinflusst wird und sich im Erscheinungsbild von dem grafischen Element unterscheidet, das in einem anderen Bild der mehreren Bilder enthalten ist, und Verknüpfen (620), während der Aufzeichnungsphase, der mehreren Bilder mit dem Eingabeereignis durch ein Verknüpfungsmodul, wobei jedes Bild aus den mehrere Bildern mindestens einen Teil der grafischen Benutzeroberfläche enthält, der das grafische Element enthält, bei dem das Eingabeereignis auftrat;
Festlegen (630), während der Aufzeichnungsphase als Reaktion auf eine Benutzereingabe, eines Bildes aus den mehreren Bildern als Ziel des Eingabeereignisses, wobei das festgelegte Bild während einer Wiedergabephase als ein Ziel verwendet wird, um den Teil der grafischen Benutzeroberfläche zu identifizieren, auf den das Eingabeereignis anzuwenden ist; und
Definieren einer Automatisierungsaktion, die das Eingabeereignis und das Ziel identifiziert, wobei das Eingabeereignis während der Wiedergabephase wiederzugeben ist.

2. Prozessorlesbares Speichermedium nach Anspruch 1, wobei das prozessorlesbare Speichermedium ferner Code umfasst, der Anweisungen darstellt, die bei ihrer Ausführung am Prozessor den Prozessor zu Folgendem veranlassen:
Auswählen eines Bildes aus den mehreren Bildern als Reaktion auf eine Benutzereingabe; und
Festlegen des ausgewählten Bildes als Ziel des Eingabeereignisses.

3. Bildbasiertes Anwendungsautomatisierungssystem (400), Folgendes umfassend:
ein Ereigniserfassungsmodul (410) zum Erfassen von auf eine grafische Benutzeroberfläche bezogene Eingabeereignissen während einer Aufzeichnungsphase;
ein Bilderzeugungsmodul (420), um während der Aufzeichnungsphase Bilder zu erzeugen, die den Eingabeereignissen zugeordnet sind, die ein grafisches Element umfassen, wobei jedes Bild aus den Bildern zu unterschiedlichen Zeiten aufgenommen wird, das grafische Element umfasst, das von den Eingabeereignissen beeinflusst wird und sich im Erscheinungsbild von dem grafischen Element unterscheidet, das in einem anderen Bild der Bilder enthalten ist, und die mindestens einen Teil der grafischen Benutzeroberfläche enthalten;
ein Verknüpfungsmodul (430), um während der Aufzeichnungsphase mehrere Bilder aus den Bildern mit einem Eingabeereignis aus den Eingabeereignissen zu verknüpfen;
ein Auswahlmodul (450), um während der Aufzeichnungsphase ein Bild aus den mehreren Bildern als Reaktion auf eine Benutzereingabe auszuwählen; und
das Verknüpfungsmodul (430), das dazu konfiguriert ist, während der Aufzeichnungsphase das ausgewählte Bild aus den mehreren Bildern als Ziel des Eingabeereignisses festzulegen, wobei das festgelegte Bild während einer Wiedergabephase als ein Ziel verwendet wird, um den Teil der grafischen Benutzeroberfläche zu identifizieren, auf den das Eingabeereignis anzuwenden ist; und eine Automatisierungsaktion zu definieren, die das Eingabeereignis und das Ziel identifiziert, wobei das Eingabeereignis während der Wiedergabephase wiederzugeben ist.

4. System (400) nach Anspruch 3, das ferner Folgendes umfasst:
ein Bildrepository (440), wobei das Verknüpfungsmodul (430) die mehreren Bilder im Bildrepository (440) speichert.

5. System (400) nach Anspruch 3 oder 4, wobei:
das grafische Element ein Element grafischer Benutzeroberflächen ist; und
das Eingabeereignis sich auf das Element grafischer Benutzeroberflächen der grafischen Benutzeroberfläche bezieht; und
die mehreren Bilder ein erstes Bild, das mindestens einen Teil des Elements grafischer Benutzeroberflächen in einem ersten Zustand enthält, und ein zweites Bild enthalten, das mindestens einen Teil des Elements grafischer Benutzeroberflächen in einem zweiten Zustand enthält.

6. Prozessorlesbares Speichermedium nach Anspruch 1 oder 2, wobei die mehreren Bilder mindestens ein vor dem Eingabeereignis aufgenommenes Bild, mindestens ein als Reaktion auf das Eingabeereignis aufgenommenes Bild und mindestens ein nach dem Eingabeereignis aufgenommenes Bild enthalten.

7. Prozessorlesbares Speichermedium nach Anspruch 1, 2 oder 6, wobei das festgelegte Bild ein erstes Bild aus den mehreren Bildern ist und das prozessorlesbare Speichermedium ferner Code umfasst, der Anweisungen darstellt, die bei ihrer Ausführung am Prozessor den Prozessor zu Folgendem veranlassen:
Auswählen eines zweiten Bildes aus den mehreren Bildern als Reaktion auf eine Benutzereingabe; und
Festlegen des zweiten Bildes aus den mehreren Bildern als Ziel des Eingabeereignisses.

8. Prozessorlesbares Speichermedium nach Anspruch 7, wobei das prozessorlesbare Speichermedium ferner Code umfasst, der Anweisungen darstellt, die bei ihrer Ausführung am Prozessor den Prozessor zu Folgendem veranlassen:
Ausgeben einer Auswahlschnittstelle, die die mehreren Bilder aufweist, an eine Anzeige.

## Revendications

1. Support lisible par processeur stockant un code représentant des instructions qui, lorsqu'elles sont exécutées sur un processeur, amènent le processeur à :
détecter par un module de détection d'événement (610), pendant une phase d'enregistrement, un événement d'entrée relatif à une interface graphique utilisateur ;
générer par un module de génération d'images, pendant la phase d'enregistrement, une pluralité d'images comprenant un élément graphique, chaque image respective de la pluralité d'images étant capturée à différents moments et comprenant l'élément graphique affecté par l'événement d'entrée et différant en apparence de l'élément graphique compris dans une autre image de la pluralité d'images, et
associer, par un module d'association, (620), pendant la phase d'enregistrement, à l'événement d'entrée de la pluralité d'images, chaque image parmi la pluralité d'images comprenant au moins une partie de l'interface graphique utilisateur qui comporte l'élément graphique au niveau duquel l'événement d'entrée s'est produit ;
désigner, en réponse à une entrée utilisateur (630), pendant la phase d'enregistrement, une image parmi la pluralité d'images comme cible pour l'événement d'entrée, dans lequel l'image désignée est utilisée comme cible pendant une phase de relecture pour identifier la partie de l'interface graphique utilisateur au niveau de laquelle l'événement d'entrée devrait être appliqué ; et
définir une action d'automatisation identifiant l'événement d'entrée et la cible, l'événement d'entrée devant être relu pendant la phase de relecture.

2. Support lisible par processeur selon la revendication 1, dans lequel le support lisible par processeur comprend en outre un code représentant des instructions qui, lorsqu'elles sont exécutées sur le processeur, amènent le processeur à :
sélectionner une image parmi la pluralité d'images en réponse à une entrée utilisateur ; et
désigner l'image sélectionnée comme cible pour l'événement d'entrée.

3. Système d'automatisation d'application basé sur l'image (400), comprenant :
un module de détection d'événement (410) pour détecter, pendant une phase d'enregistrement, des événements d'entrée relatifs à une interface graphique utilisateur ;
un module de génération d'images (420) pour générer, pendant la phase d'enregistrement, des images associées aux événements d'entrée et comprenant un élément graphique, chaque image parmi les images étant capturée à différents moments et comprenant l'élément graphique affecté par les événements d'entrée et différant en apparence de l'élément graphique compris dans une autre image des images, et comprenant au moins une partie de l'interface graphique utilisateur ;
un module d'association (430) pour associer, pendant la phase d'enregistrement, une pluralité d'images parmi les images avec un événement d'entrée parmi les événements d'entrée ;
un module de sélection (450) pour sélectionner, pendant la phase d'enregistrement, une image parmi la pluralité d'images en réponse à une entrée utilisateur ; et
le module d'association (430) configuré pour désigner, pendant la phase d'enregistrement, l'image sélectionnée parmi la pluralité d'images comme cible pour l'événement d'entrée, dans lequel l'image désignée est utilisée comme cible pendant une phase de relecture pour identifier la partie de l'interface graphique utilisateur au niveau de laquelle l'événement d'entrée devrait être appliqué, et définir une action d'automatisation identifiant l'événement d'entrée et la cible, l'événement d'entrée devant être relu pendant la phase de relecture.

4. Système (400) selon la revendication 3, comprenant en outre :
un référentiel d'images (440), le module d'association (430) stockant la pluralité d'images dans le référentiel d'images (440).

5. Système (400) selon la revendication 3 ou 4, dans lequel :
l'élément graphique est un élément d'interface graphique utilisateur ; et
l'événement d'entrée est relatif à l'élément d'interface graphique utilisateur de l'interface graphique utilisateur ; et
la pluralité d'images comprend une première image comprenant au moins une partie de l'élément d'interface graphique utilisateur dans un premier état et une seconde image comprenant au moins une partie de l'élément d'interface graphique utilisateur dans un second état.

6. Support lisible par processeur selon la revendication 1 ou 2, dans lequel la pluralité d'images comprend au moins une image capturée avant l'événement d'entrée, au moins une image capturée en réponse à l'événement d'entrée et au moins une image capturée après l'événement d'entrée.

7. Support lisible par processeur selon l'une quelconque des revendications 1, 2 ou 6, dans lequel l'image désignée est une première image parmi la pluralité d'images et le support lisible par processeur comprend en outre un code représentant des instructions qui, lorsqu'elles sont exécutées sur le processeur, amènent le processeur à :
sélectionner une seconde image parmi la pluralité d'images en réponse à une entrée utilisateur ; et
désigner la seconde image parmi la pluralité d'images comme cible pour l'événement d'entrée.

8. Support lisible par processeur selon la revendication 7, dans lequel le support lisible par processeur comprend en outre un code représentant des instructions qui, lorsqu'elles sont exécutées sur le processeur, amènent le processeur à :
délivrer une interface de sélection comprenant la pluralité d'images sur un affichage.
